# EUROPÄISCHE PATENTANMELDUNG

(11) **EP 0 967 823 A2**
(43) Veröffentlichungstag der Anmeldung: **29.12.1999**
(21) Anmeldenummer: 99112100.5
(22) Anmeldetag: 22.06.1999
(51) Int. Cl.: H04Q 11/04

(54) **Verfahren zur Steuerung einer Telekommunikationsanlage durch einen Computer und zugehörige Schnittstellen**

(30) Priorität: 25.06.1998 DE 19828485
(71) Anmelder: SIEMENS AKTIENGESELLSCHAFT, 80333 München (DE)
(72) Erfinder: Tanger, Erwin, D-33129 Delbrück (DE); Brüggemeier, Wolfgang, D-33129 Delbrück (DE)

(57) **Zusammenfassung**

Die Erfindung bezieht sich auf ein Verfahren zur Steuerung einer Telekommunikationsanlage TKA durch einen Computer 100 sowie auf die zugehörigen Schnittstellen zwischen dem Computer bzw. einem Computernetzwerk und einem Datenkanal sowie zwischen dem Datenkanal und der TKA. Das Verfahren sowie die Schnittstellen offenbaren eine Möglichkeit, nicht nur Telefonvermittlungsfunktionen der TKA durch Abwicklung eines ersten Kommunikationsprotokolls, sondern zusätzlich auch eine Konfiguration der TKA durch Abwicklung eines zweiten Kommunikationsprotokolls vom Computer aus über den Datenkanal steuern zu können.

## Beschreibung

Die Erfindung bezieht sich auf ein Verfahren zur Steuerung einer Telekommunikationsanlage TKA durch einen Computer sowie auf zugehörige Schnittstellen zwischen einem Computernetzwerk und einem Datenkanal sowie zwischen dem Datenkanal und der TKA gemäß den Oberbegriffen der Patentansprüche 1, 7 und 13.

Zum Zwecke ihrer Steuerung sind TKAs üblicherweise über einen Datenkanal an einen Computer angeschlossen. Die Steuerung der TKAs erfolgt durch Abwicklung einer Vielzahl von Softwareprogrammen, sog. computer telephone integration CTI-Applikationen, die alle auf dem Computer laufen und in Form von individuellen Kommunikationsprotokollen mit der TKA kommunizieren.

Im folgenden sei ein solcher Kommunikationsvorgang beispielhaft erläutert:

Ein in dem Computer enthaltener private branch exchange PBX-Treiber baut über den Datenkanal, der z. B. ein ISDN-B-Kanal sein kann, eine Verbindung zu einer Instanz innerhalb der TKA auf. Über diese Verbindung werden dann zwischen dem Computer und der TKA Nachrichten in Form von Kommunikationsprotokollen, welche z. B. das standardisierte CSTA-Protokoll sein können, ausgetauscht.

Im Rahmen der Protokollabwicklung schickt der PBX-Treiber Service Requests, die von den CTI-Applikationen generiert werden, über den Datenkanal an die TKA, wo sie umgesetzt werden und mit einer Response beantwortet werden. Die Response wird dann von der TKA über den Datenkanal zurück an den Computer geschickt.

Neben einer direkten Ankopplung eines einzigen Computers an eine TKA ist es auch bekannt, eine TKA über einen Datenkanal an ein Computernetzwerk anzuschließen, wobei dann ein Schnittstellencomputer als Schnittstelle zwischen dem Netzwerk und dem Datenkanal dient. Die angesprochenen CTI-Applikationen können dann entweder auf dem Schnittstellencomputer selbst, oder auf einem der anderen, an das Netzwerk angeschlossenen, Computer laufen. In diesem Fall enthält der Schnittstellencomputer den PBX-Treiber, der unmittelbar die Verbindungen zwischen dem Netzwerk und dem Datenkanal verwaltet.

Unabhängig davon, ob eine TKA nur an einen einzelnen Computer oder an ein Computernetzwerk angeschlossen ist, erfolgte bisher über den Computer lediglich eine Steuerung von Vermittlungsfunktionen der TKA, d. h. ihrer Switching-Funktionalität.

Aus den DE 43 30 031 C2 und DE 44 06 354 C2 ist eine Anordnung zur Integration von EDV-Systemen und Telefonanlagen, die an das öffentliche Telefonnetz angeschlossen sind, bekannt. Beide Patentschriften offenbaren eine Hardwarestruktur mit einer TKA, die über eine Leitung und ein zwischengeschaltetes Schnittstellenrechnersystem an ein Computernetzwerk angeschlossen ist. An das Computernetzwerk sind neben einem LAN-Server eine Vielzahl von Computern angeschlossen, über die die TKA gesteuert werden kann.

Gemäß diesem Stand der Technik werden die Vermittlungsfunktionen der TKA gesteuert, zu denen insbesondere das Verbinden und Trennen von Teilnehmern sowie die Steuerung des Datentransfers zwischen Endgeräten zählen.

Aufgabe der vorliegenden Erfindung ist es, ein Verfahren zur Steuerung einer TKA durch einen Computer, so wie zugehörige Schnittstellen zwischen einem Computernetzwerk und einem Datenkanal sowie zwischen dem Datenkanal und der TKA bereitzustellen, die neben der Steuerung von Vermittlungsfunktionen auch die Steuerung anderer Funktionen der TKA durch den Computer ermöglichen.

Diese Aufgabe wird durch die in dem Verfahrensanspruch 1 und den Vorrichtungsansprüchen 7 und 13 definierten Gegenstände gelöst. Bevorzugte Ausgestaltungen sind Gegenstand der Unteransprüche.

Das in Patentanspruch 1 beanspruchte Verfahren bietet den Vorteil, daß die Möglichkeiten zur Steuerung einer Telekommunikationsanlage TKA durch einen Computer wesentlich erweitert werden.

So ist es durch dieses Verfahren möglich, daß moderne CTI-Applikationen, die auf dem Computer laufen, nicht nur wie bisher, reine Switching-Funktionen der TKA steuern, sondern daß sie auch andere Funktionen der TKA steuern, in dem sie z. B. deren Datenbasis manipulieren. Weiterhin besteht die Möglichkeit zur Abwicklung verschiedener Kommunikationsprotokolle über einen Datenkanal.

Gemäß einer vorteilhaften Weiterbildung des Verfahrens wird die TKA durch die Abwicklung des zweiten Kommunikationsprotokolls konfiguriert, wobei es sich dabei vorzugsweise um das proprietäre APKONF-Protokoll handelt.

Es ist vorteilhaft, wenn es sich bei dem ersten Kommunikationsprotokoll um das standardisierte CSTA-Protokoll handelt, weil dieses neben der Steuerung reiner Vermittlungsfunktionen der TKA auch die Abwicklung sogenannter Escape-Mechanismen vorsieht, die eine private Definition von Leistungsmerkmalen gestatten.

Es ist weiterhin von Vorteil, wenn der Datenkanal aus wenigstens einem ISDN-B-Kanal gebildet ist. Ein solcher Kanal bietet zum einen den Vorteil, daß über ihn ISDN-taugliche TKAs verhältnismäßig einfach an einen Computer angeschlossen werden können. Zum anderen bietet ein einziger ISDN-B-Kanal die Möglichkeit, gleichzeitig mehrere B-Kanal-Verbindungen (Links) zu betreiben. Außerdem können zur Umgehung einer 64kBaud-Beschränkung eines B-Kanals in dem Datenkanal mehrere B-Kanäle zu einem B-Kanal-Pool zusammengefaßt werden.

Schließlich ist es von Vorteil, wenn nicht nur ein Computer, sondern ein Computernetzwerk über den Datenkanal an die TKA angeschlossen ist, und eine Schnittstelle das Computernetzwerk mit dem Datenkanal verbindet. Es wird damit möglich, von jedem an das Netzwerk angeschlossenen Computer einschließlich der Schnittstellencomputer die TKA zu steuern. Der Schnittstellencomputer, auf dem auch CTI-Applikationen laufen können, die u.a. eine Steuerung von reinen Telefonfunktionen ermöglichen, dient dann als Gateway, das die TKA an das Computernetzwerk anbindet.

Die erfindungsgemäße Schnittstelle zwischen einem Computernetzwerk und einem Datenkanal ist so ausgebildet, daß sie im Rahmen der Abwicklung eines zweiten Kommunikationsprotokolls Requests über einen zweiten logischen Link in dem Datenkanal an die TKA sendet.

Mit dem zweiten logischen Link in dem Datenkanal wird die Abwicklung eines zweiten Kommunikationsprotokolls ermöglicht, wodurch die Möglichkeiten zur Steuerung zusätzlicher Funktionen der TKA wesentlich erweitert werden. Insbesondere können auf diese Weise nicht nur reine Switching-Funktionen der TKA gesteuert werden, sondern es kann z. B. die Datenbasis der TKA manipuliert werden.

Gemäß einer weiteren bevorzugten Ausgestaltung der Schnittstelle handelt es sich bei dem ersten Kommunikationsprotokoll um ein CSTA-Protokoll. Dieses bietet nicht nur die Möglichkeit der Steuerung von reinen Vermittlungsfunktionen der TKA, sondern darüber hinaus auch die Möglichkeit der Steuerung weiterer Funktionen der TKA und gestattet insbesondere eine private Definition von speziellen Leistungsmerkmalen.

Es ist weiterhin von Vorteil, daß die TKA durch Abwicklung des zweiten Kommunikationsprotokolls konfiguriert wird, insbesondere dann, wenn es sich bei diesem Protokoll um das APKONF-Protokoll handelt.

Vorzugsweise weist die Schnittstelle einen Nebenstellentreiber (PBX-Driver) auf, der die Requests jeweils zu einer vorbestimmten Instanz innerhalb der TKA sendet und als zu einem bestimmten Kommunikationsprotokoll zugehörig kennzeichnet. Durch die gezielte Adressierung der Requests und deren Kennzeichnung als zu einem bestimmten Kommunikationsprotokoll gehörig, wird eine spätere Auswertung und Verarbeitung der Requests durch die TKA wesentlich vereinfacht.

Die Schnittstelle zwischen dem Datenkanal und TKA zeichnet sich dadurch aus, daß sie die über einen zweiten logischen Link in dem Datenkanal empfangenen Requests in ein zweites TKA-internes Datenformat umwandelt. Über den zweiten logischen Link wird regelmäßig ein zweites Kommunikationsprotokoll abgewickelt, das gegenüber einem ersten Kommunikationsprotokoll eine Steuerung zusätzlicher Funktionen der TKA ermöglicht. Mit der Umwandlung der Requests aus dem zweiten Kommunikationsprotokoll in ein eigenes, zweites, TKA-internes Datenformat, wird eine Verwechslung von Requests aus dem ersten Kommunikationsprotokoll mit Requests aus dem zweiten Kommunikationsprotokoll innerhalb der TKA vermieden. Weitere Vorteile von bevorzugten Ausführungen der erfindungsgemäßen Schnittstelle zwischen Datenkanal und TKA wurden oben erläutert.

Gemäß einer weiteren vorteilhaften Ausgestaltung weist die Schnittstelle zwischen dem Datenkanal und der TKA einen CTI-Handler CTIH auf, der die Requests aus den verschiedenen Kommunikationsprotokollen aus dem Datenkanal entgegen nimmt.

Weiterhin ist es von Vorteil, wenn dieser CTIH einen Router aufweist, der die Requests jeweils in ein geeignetes TKA-internes Datenformat umsetzt.

Schließlich ist es von Vorteil, wenn die Schnittstelle einen CTI-Manager aufweist, der die umgesetzten Requests entweder selber bearbeitet oder an geeignete TKA-interne Instanzen weiterleitet.

Es erfolgt eine detaillierte Beschreibung bevorzugter Ausführungsbeispiele der Erfindung unter Bezugnahme auf die beigefügten Figuren. Dabei zeigen:
Fig. 1 die Kommunikation zwischen einem Computer und einer TKA über einen ISDN-B-Kanal;
Fig. 2 eine Schnittstelle zwischen einem Computernetzwerk und dem ISDN-B-Kanal;
Fig. 3 eine Schnittstelle zwischen dem ISDN-B-Kanal und der TKA; und

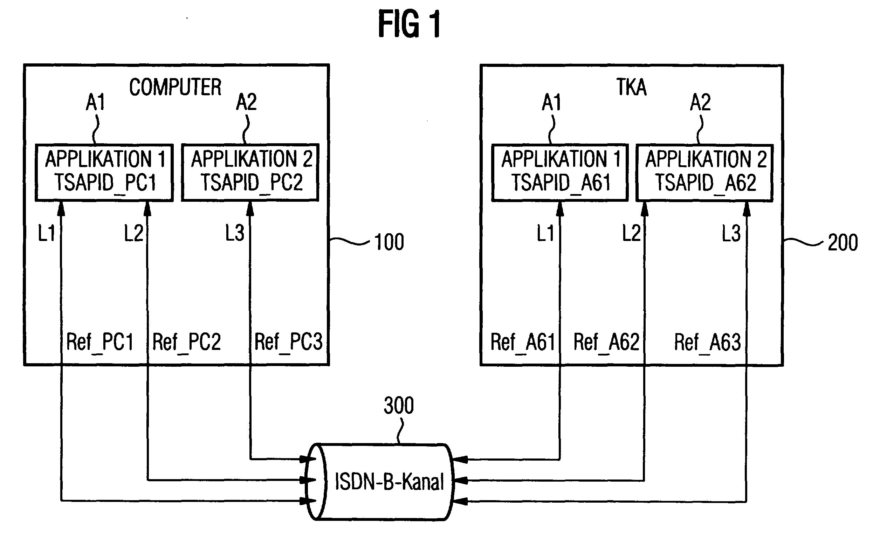

Gemäß dem in Fig. 1 gezeigten Ausführungsbeispiel der Erfindung kommuniziert ein Computer 100 mit einer Telekommunikationsanlage TKA 200 über einen ISDN-B-Kanal 300. Auf dem Computer 100 laufen zwei computer telephone integration CTI-Applikationen A1 und A2, die jeweils verschiedene Kommunikationsprotokolle abwickeln. Im Rahmen der Abwicklung der Kommunikationsprotokolle veranlassen die Applikationen eine in Fig. 1 nicht gezeigte Schnittstelle zwischen dem Computer 100 und dem ISDN-B-Kanal 300 dazu, im B-Kanal einen X.224-konformes Protokoll zu definieren, das es erlaubt, den Computer 100 über einen oder mehrere logische Links mit der TKA 200 zu verbinden. Über einen logischen Link wird jeweils nur ein Kommunikationsprotokoll abgewickelt.

Jeder Link bekommt im Computer 100 und in der TKA 200 jeweils eine Referenznununer Ref_PCx bzw. Ref_A6x. Dabei bezeichnen die Abkürzungen PC und A6 einen Computer und eine TKA. Das x gibt eine gemeinsame, sowohl für die Computerseite wie auch für die TKA-Seite gültige, eindeutige Link-Nummer Lx an.

Die Schnittstelle X.224 kennt neben ReferenzIDs, die durch die Referenznummern symbolisiert werden, auch Transport Service Access Point Identifier TSAP-ID_y, um einen Schicht-4-Link zu kennzeichnen. Dabei symbolisiert das y die jeweils zum entsprechenden Link gehörige Applikation sowie entweder den Computer 100 oder die TKA 200, auf der die jeweilige Applikation läuft.

Die normierte Schnittstelle X.224 kennt Source-References und Destination-References. Aus Sicht des Computers 100 stellen alle Referenznunmern Ref_A6x Destination-References und alle Referenznummern Ref_PCx Source-References dar, wenn der Computer 100 einen Request zur TKA 200 schickt. Umgekehrt ist die Interpretation der Referenznummern aus Sicht der TKA, wenn diese z. B. Responses an den Computer schickt.

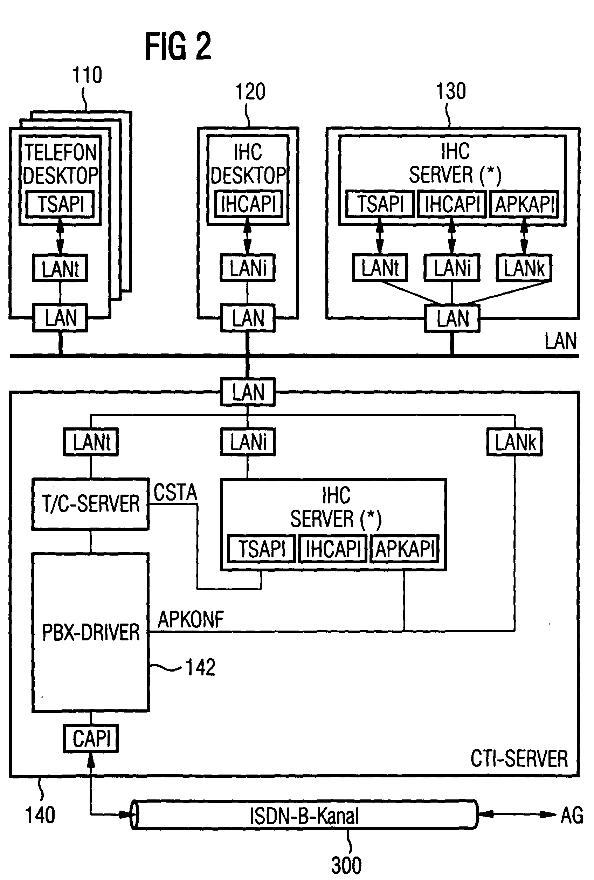

Fig. 2 zeigt die erfindungsgemäße Schnittstelle zwischen einem Computernetzwerk LAN und einem ISDN-B-Kanal 300. An das Computernetzwerk, bei dem es sich um ein lokal area network LAN handelt, sind eine Vielzahl von Computern 110...140 über physikalische LAN-Anschlüsse angeschlossen.

Auf den Computern 110 laufen jeweils Telefondesktop-Programme, die über eine Novell-Programmierschnittstelle für Telephone Services TSAPI und einen zugehörigen logischen LAN-Anschluß LANt an das LAN angeschlossen sind. Dabei symbolisiert der LANt-Anschluß eine LAN-Verbindung, die für TSAPI-/CSTA-Services benutzt wird. CSTA bezeichnet ein spezielles Kommunikationsprotokoll, welches insbesondere zur Steuerung von Vermittlungsfunktionen einer TKA verwendet wird.

Auf dem Computer 120 läuft ein Inbound Hunting Group Call Processing IHC-Desktop-Programm, welches über eine IHCAPI-Programmierschnittstelle für die Kommunikation zwischen einem IHC-Server- und dem IHC-Desktop-Programm und einen zugehörigen logischen LANi-Anschluß an das LAN angeschlossen ist. Dabei symbolisiert der LANi-Anschluß eine LAN-Verbindung, die für die Kommunikation zwischen dem IHC-Desktop-Programm und einem IHC-Server-Programm benutzt wird.

Auf dem Computer 130 läuft das IHC-Server-Programm als CTI-Applikation, die über die eigenen Programmierschnittstellen TSAPI, IHCAPI und APKAPI sowie die jeweils zugehörigen logischen LAN-Anschlüsse LANt, LANi und LANk an das Computernetz LAN angeschlossen ist. Dabei bezeichnet APKAPI eine Programmierschnittstelle für CTI-Applikationen, die eine Konfiguration der TKA vornehmen. Neben der Steuerung einer Switching-Funktion der TKA, bieten die CTI-Applikationen auch z.B. die Möglichkeit, die Datenbasis der TKA zu manipulieren oder sich dynamisch zur Laufzeit mit der TKA-Datenbasis zu synchronisieren.

Der Computer 140 dient als Schnittstelle zwischen dem LAN und dem ISDN-B-Kanal 300. Als CTI-Server bindet er das LAN über den ISDN-B-Kanal 300 an die TKA 200 an und ermöglicht so eine breite Funktionssteuerung der TKA durch den Computer. Der CTI-Server 140 ist über einen LAN-Anschluß an das LAN angeschlossen.

Als zentrale Funktionsbaugruppe weist der CTI-Server 140 einen private branch exchange PBX-Treiber 142 auf, der über eine Novell-Schnittstelle, hier als T/C-Server bezeichnet, an den LAN-Anschluß und über eine common application programming interface CAPI-Schnittstelle an den ISDN-B-Kanal 300 angeschlossen ist. Für die Abwicklung von Konfigurationsprotokollen über den LAN-Anschluß besitzt der PBX-Treiber 142 eine besondere Schnittstelle zu deren Benutzung und Ansteuerung eigens ein application program interface API bereitgestellt wird.

Während seines Betriebs empfängt der CTI-Server 142 über seinen LAN-Anschluß Requests, die von dem IHC-Server im Rahmen der Abwicklung verschiedener Applikationen mit unterschiedlichen standardisierten Kommunikationsprotokollen, wie z.B. dem bereits erwähnten CSTA-Protokoll zur Steuerung von Vermittlungsfunktionen generiert werden. Neben den standardisierten Protokollen findet insbesondere das proprietäre APKONF-Protokoll zur Konfigurierung der TKA Anwendung.

Innerhalb des CTI-Servers 140 werden die über den LAN-Anschluß empfangenen protokollspezifischen Requests über die genannten internen Schnittstellen an den PBX-Treiber 142 weitergeleitet. Der PBX-Treiber kennzeichnet die Requests zunächst entsprechend ihrem Protokoll z. B. als CSTA-Requests oder APKONF-REquests. Daraufhin baut er protokollspezifische logische Links in dem über die CAPI-Schnittstelle angeschlossenen ISDN-B-Kanal 300 auf und schickt die Requests über die logischen Links an die TKA 200.

Die TKA kann bis zu 5 B-Kanal-Links gleichzeitig verarbeiten und betreiben. Die bestehende 64 kBit/s-Beschränkung eines B-Kanals kann von dem PBX-Treiber dadurch umgangen werden, daß er mehrere B-Kanäle zu einem B-Kanal-Pool zusammenfaßt. Verschiedene CSTA-Requests und APKONF-Requests können dabei dynamisch von dem PBX-Treiber auf die B-Kanäle des Pools verteilt werden.

Alle aufgezeigten Verbindungen zwischen den Computern 110...130 im Computernetzwerk LAN über den CTI-Server 140 zum ISDN-B-Kanal 300 sind für bidirektionalen Datenverkehr ausgebildet. Im Rahmen der Protokollabwicklung können also auch Responses von der TKA über den ISDN-B-Kanal 300 und den CTI-Server 140 an das Computernetzwerk gesendet werden.

Der IHC-Server kann entweder auf dem CTI-Server 140 oder auf einem beliebigen, an das LAN angeschlossenen Computer, laufen; allerdings darf er nicht gleichzeitig auf zwei Computern laufen (siehe (*) in Fig. 2).

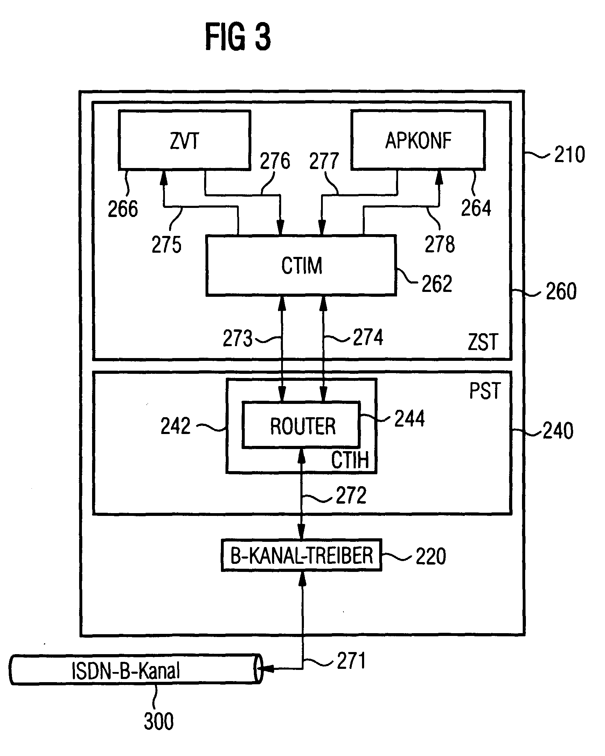

Fig. 3 zeigt eine erfindungsgemäße Schnittstelle 210 zwischen dem ISDN-B-Kanal 300 und der Telekommunikationsanlage TKA 200. Sie untergliedert sich in drei Bereiche, einen B-Kanal-Treiber 220, einen Peripheriesteuerungsbereich PST-Bereich 240 und einen zentralen Steuerungsbereich ZST-Bereich 260. Der B-Kanal-Treiber 220 ist als bidirektionale Schnittstelle unmittelbar zwischen den ISDN-B-Kanal 300 und den PST-Bereich 240 geschaltet. Er ist über den bidirektionalen Kanal 271 an den ISDN-B-Kanal und über den bidirektionalen Kanal 272 an den PST-Bereich 240 angeschlossen. Der PST-Bereich 240 weist einen computer telephone integration handler CTIH 242 auf, der über den bidirektionalen Kanal 272 an den B-Kanal-Treiber 240 angeschlossen ist. Der CTIH 242 besitzt einen Router 244, der einerseits über den CTIH 242 bidirektional mit dem B-Kanal-Treiber 220 kommuniziert, der aber andererseits über zwei separate bidirektionale Kanäle 273, 274 mit dem ZST-Bereich 260 kommuniziert, genauer gesagt, mit einem CTI-Manager CTIM 262 innerhalb des ZST-Bereiches.

Neben dem CTIM 262 weist der ZST-Bereich eine Zentrale Vermittlungstechnik ZVT-Instanz 266 sowie eine APKONF-Instanz 264 auf. Der CTIM 262 kommuniziert außer mit dem Router 244 im PST-Bereich 240 innerhalb des ZST-Bereiches 260 jeweils bidirektional mit den Instanzen ZVT 260 und APKONF 264. Die bidirektionale Kommunikation erfolgt dabei zu jeder Instanz über zwei separate unidirektionale Datenkanäle 275...278.

Während des Betriebes der Schnittstelle 210 erhält der CTIH 242 Nachrichten aus dem ISDN-B-Kanal 300 über den B-Kanal-Treiber 220. Die Nachrichten können dabei aus unterschiedlichen Kommunikationsprotokollen stammen, z. B. aus dem CSTA-Protokoll oder dem APKONF-Protokoll. Die empfangenen Nachrichten werden von dem CTIH 242 an den internen Router 244 weitergeleitet, der sie protokollspezifisch in TKA-interne Datenformate umwandelt. Auf diese Weise werden empfangene CSTA-Nachrichten in ein internes PID_CS-Format und empfangene APKONF-Nachrichten in ein internes PID_APS-Format umgewandelt. Innerhalb des Routers werden die empfangenen Nachrichten protokollspezifisch separiert und von dort aus in Form der TKA-internen Datenformate über die Kanäle 273 und 274 dem CTIM 262 innerhalb des ZST-Bereiches 260 zugeführt.

Der CTIM 262 ist die zentrale Zielapplikation innerhalb der TKA 200 für alle über den ISDN-B-Kanal 300 von dem Computer 100 oder alternativ von dem Computernetzwerk LAN gesendeten Requests. Eingehende Requests im CSTA-Format, bzw. in das entsprechende interne Datenformat umgewandelte Daten, werden überwiegend von dem CTIM 262 selber bearbeitet und von ihm durch die Ausgabe von entsprechenden Responses an den Computer 100 beantwortet. Ein verbleibender Teil der CSTA-Reguests, der nicht von dem CTIM 262 selber bearbeitet wird, wird von diesem über den unidirektionalen Kanal 275 an die ZVT-Instanz 266 weitergeleitet und von dieser bearbeitet.

Der CTIM 262 bearbeitet grundsätzlich keine Konfigurationsanforderungen, die üblicherweise in Form des APKONF-Formates über den ISDN-B-Kanal 300 an ihn heran getragen werden. Derartige Requests werden unmittelbar von dem CTIM 262 über den unidirektionalen Datenkanal 278 an die nachgeschaltete APKONF-Instanz 264 zur Bearbeitung weitergeleitet. Die APKONF-Instanz 264 ist die einzige Instanz innerhalb der Schnittstelle 210, die Konfigurationsanforderungen bearbeiten kann.

Alle Datenverbindungen zwischen den einzelnen Instanzen und Komponenten innerhalb der Schnittstelle sowie die Verbindung 271 vom B-Kanaltreiber 220 zum ISDN-B-Kanal 300 sind für die Kommunikation der TKA 200 mit dem Computer 100 im Rahmen verschiedener Kommunikationsprotokolle bidirektional ausgelegt. Es können also nicht nur Service Requests vom Computer 100 in der Schnittstelle 210 der TKA 200 empfangen werden, sondern die einzelnen Instanzen innerhalb der Schnittstelle, insbesondere die ZVT-Instanz 266, die APKONF-Instanz 264 sowie der CTIM 262, können ihrerseits Responses oder Requests im Rahmen einzelner Kommunikationsprotokolle über den ISDN-B-Kanal 300 an den Computer 100 senden.

## Patentansprüche

1. Verfahren zur Steuerung einer Telekommunikationsanlage TKA (200) durch einen Computer (100), welcher über wenigstens eine Schnittstelle und über einen ersten logischen Link in einem Datenkanal (300) eine erste Verbindung zu der TKA (200) aufbaut, um Vermittlungsfunktionen der TKA durch Abwicklung eines ersten Kommunikationsprotokolls zu steuern,
**dadurch gekennzeichnet**, daß
der Computer (100) über die Schnittstelle und über einen zweiten logischen Link in dem Datenkanal (300) eine zweite Verbindung zu der TKA (200) aufbaut, um neben den Vermittlungsfunktionen auch andere Funktionen der TKA durch Abwicklung eines zweiten Kommunikationsprotokolls zu steuern.

2. Verfahren nach Anspruch 1, **dadurch gekennzeichnet**, daß die TKA (200) durch die Abwicklung des zweiten Kommunikationsprotokolls konfiguriert wird.

3. Verfahren nach Anspruch 2, **dadurch gekennzeichnet**, daß das zweite Kommunikationsprotokoll das proprietäre APKONF-Protokoll ist.

4. Verfahren nach einem der Ansprüche 1 bis 3, **dadurch gekennzeichnet**, daß das erste Kommunikationsprotokoll das standardisierte CSTA-Protokoll ist.

5. Verfahren nach einem der Ansprüche 1 bis 4, **dadurch gekennzeichnet**, daß der Datenkanal (300) aus wenigstens einem ISDN-B-Kanal gebildet ist.

6. Verfahren nach einem der Ansprüche 1 bis 5, **dadurch gekennzeichnet**, daß der Computer (100) an ein Computernetzwerk (LAN) angeschlossen ist und die Schnittstelle (140) das Computernetzwerk mit dem Datenkanal (300) verbindet.

7. Schnittstelle (140) zwischen einem wenigstens einen Computer (110, 120, 130) umfassendes Computernetzwerk (LAN) und einem Datenkanal (300), die im Rahmen der Abwicklung eines ersten Kommunikationsprotokolls Requests von dem Computer (100) über einen ersten logischen Link in dem Datenkanal (300) an eine Telekommunikationsanalge TKA sendet, wobei das erste Kommunikationsprotokoll Vermittlungsfunktionen der TKA steuert,
**dadurch gekennzeichnet**, daß
die Schnittstelle (140) so ausgebildet ist, daß sie im Rahmen der Abwicklung eines zweiten Kommunikationsprotokolls, welches zur Steuerung zusätzlicher Funktionen der TKA dient, Requests über einen zweiten logischen Link in dem Datenkanal (300) an die TKA (200) sendet.

8. Schnittstelle (140) nach Anspruch 7, **dadurch gekennzeichnet**, daß das erste Kommunikationsprotokoll das standardisierte CSTA-Protokoll ist.

9. Schnittstelle (140) nach Anspruch 7 oder 8, **dadurch gekennzeichnet**, daß die TKA (200) durch Abwicklung des zweiten Kommunikationsprotokolls konfiguriert wird.

10. Schnittstelle (140) nach Anspruch 9, **dadurch gekennzeichnet**, daß das zweite Kommunikationsprotokoll das proprietäre APKONF-Protokoll ist.

11. Schnittstelle (140) nach einem der Ansprüche 7 bis 10, **dadurch gekennzeichnet**, daß der Datenkanal (300) aus wenigstens einem ISDN-B-Kanal gebildet ist.

12. Schnittstelle (140) nach einem der Ansprüche 7 bis 11, **gekennzeichnet durch** einen Nebenstellentreiber (142), der die Requests jeweils zu einer vorbestimmten Instanz innerhalb der TKA (200) sendet und als zu einem bestimmten Kommunikationsprotokoll gehörig kennzeichnet.

13. Schnittstelle (210) zwischen einem Datenkanal (300) und einer Telekommunikationsanlage TKA (200) zum Umwandeln von Requests, die über einen ersten logischen Link in dem Datenkanal (300) im Rahmen der Abwicklung eines ersten Kommunikationsprotokolls empfangen werden, in ein erstes TKA-internes Datenformat, wobei das erste Kommunikationsprotokoll Vermittlungsfunktionen der TKA steuert,
**dadurch gekennzeichnet**, daß
die Schnittstelle (210) Requests, die über einen zweiten logischen Link in dem Datenkanal (300) im Rahmen der Abwicklung eines zweiten Kommunikationsprotokolls empfangen werden, in ein zweites TKA-internes Datenformat umwandelt, wobei das zweite Kommunikationsprotokoll zusätzliche Funktionen der TKA (200) steuert.

14. Schnittstelle (210) nach Anspruch 13, **dadurch gekennzeichnet**, daß das erste Kommunikationsprotokoll das standardisierte CSTA-Protokoll ist.

15. Schnittstelle (210) nach Anspruch 13 oder 14, **dadurch gekennzeichnet**, daß die TKA (200) durch Abwicklung des zweiten Kommunikationsprotokolls konfiguriert wird.

16. Schnittstelle (210) nach Anspruch 15, **dadurch gekennzeichnet**, daß das zweite Kommunikationsprotokoll das proprietäre APKONF-Protokoll ist.

17. Schnittstelle (210) nach einem der Ansprüche 13 bis 16, **dadurch gekennzeichnet**, daß der Datenkanal (300) aus wenigstens einem ISDN-B-Kanal gebildet ist.

18. Schnittstelle (210) nach einem der Ansprüche 13 bis 17, **gekennzeichnet durch** einen computer telephone integration handler CTIH (242), der die requests aus den verschiedenen Kommunikationsprotokollen aus dem Datenkanal (300) entgegen nimmt.

19. Schnittstelle (210) nach Anspruch 18, **dadurch gekennzeichnet**, daß der CTIH einen Router (244) aufweist, welcher Requests aus den Kommunikationsprotokollen jeweils in ein TKA-internes Datenformat umsetzt.

20. Schnittstelle (210) nach Anspruch 19, **gekennzeichnet durch** einen computer telephone integration manager CTIM (262), welcher die umgesetzten Requests von dem Router (244) empfängt und diese entweder selber verarbeitet oder an geeignete schnittstelleninterne Instanzen (264, 266) weiterleitet.
